# EUROPEAN PATENT APPLICATION

(11) **EP 3 343 990 A1**
(43) Date of publication of application: **04.07.2018**
(21) Application number: 16850193.0
(22) Date of filing: 29.07.2016
(51) Int. Cl.: H04W 72/04

(54) **METHOD FOR TRANSMITTING CONTROL INFORMATION IN WIRELESS COMMUNICATION SYSTEM, BASE STATION AND USER EQUIPMENT**

(30) Priority: 28.09.2015 CN 201510628612
(71) Applicant: Huawei Technologies Co., Ltd., Longgang District Shenzhen, Guangdong 518129 (CN)
(72) Inventor: SHI, Zhenyu, Shenzhen Guangdong 518129 (CN); HUANG, Lei, Shenzhen Guangdong 518129 (CN); WANG, Yi, Shenzhen Guangdong 518129 (CN)
(74) Representative: Gill Jennings & Every LLP
(86) International application number: PCT/CN2016/092211
(87) International publication number: WO 2017/054569

(57) **Abstract**

The present invention discloses a method for transmitting control information in a wireless communications system, a base station, and user equipment UE. The method includes: determining, by a base station, a time domain resource used by a control channel, where the control channel is configured to transmit control information of a plurality of UEs, and the time domain resource includes polling time of a plurality of beams; and receiving or sending, by the base station, the control information of the plurality of UEs within the polling time of the plurality of beams, wherein control information of each of the plurality of UEs is transmitted through a beam corresponding to the UE. The method for transmitting control information in a wireless communications system, the base station, and the UE in embodiments of the present invention can implement control information transmission between a base station and a plurality of UEs in a high-frequency system.

## Description

This application claims priority to Chinese Patent Application No. 201510628612.X, filed with the Chinese Patent Office on September 28, 2015 and entitled "METHOD FOR TRANSMITTING CONTROL INFORMATION IN WIRELESS COMMUNICATIONS SYSTEM, BASE STATION, AND USER EQUIPMENT", which is incorporated herein by reference in its entirety.

### TECHNICAL FIELD

The present invention relates to the communications field, and more specifically, to a method for transmitting control information in a wireless communications system, a base station, and user equipment (UE).

### BACKGROUND

In an existing mobile communications system, for example, a communications system such as Universal Mobile Telecommunications System (Universal Mobile Telecommunications System, UMTS) or Long Term Evolution (Long Term Evolution, LTE), control information is transmitted by using an omnidirectional antenna. For downlink control information, a base station sends downlink control information by using an omnidirectional antenna, and all user equipments (UEs) served by the base station are capable of successfully receiving the downlink control information. For uplink control information, UE sends uplink control information, and the base station is capable of successfully receiving the uplink control information by using the omnidirectional antenna. Therefore, in the existing LTE communications system, the base station and the UE use the omnidirectional antenna to send and receive control information, and communication between the base station and the UE is not related to beam switching.

In a high-frequency system, signal frequency is high and line loss is relatively great. A large-scale array antenna may be implemented by using a short wavelength feature of a high frequency signal. Therefore, high path loss of the high frequency system can be compensated by using large directional antenna gain brought by a beamforming technology. In this way, a directional beam formed by using the large array antenna also needs to be used for communication between a base station and UE. A signal transmitted on one directional beam can cover only a small part of areas in a specific direction. To ensure communication quality, beam switching is required for communication between the base station and different UEs. Therefore, a solution that supports control information transmission of a plurality of UEs is required if there are a plurality of beams in the high-frequency system.

### SUMMARY

Embodiments of the present invention provide a method for transmitting control information in a wireless communications system, a base station, and UE, to implement control information transmission between a base station and a plurality of UEs in a high-frequency system.

According to a first aspect, a method for transmitting control information in a wireless communications system is provided, where the method includes:
determining, by a base station, a time domain resource used by a control channel, where the control channel is configured to transmit control information of a plurality of UEs, and the time domain resource includes polling time of a plurality of beams; and
receiving or sending, by the base station, the control information of the plurality of UEs within the polling time of the plurality of beams, where control information of each of the plurality of UEs is transmitted through a beam corresponding to the UE.

With reference to the first aspect, in a first implementation of the first aspect, the plurality of beams are configured available beams, and the receiving or sending, by the base station, the control information of the plurality of UEs within the polling time of the plurality of beams includes:
receiving, by the base station within polling time of a first beam, uplink control information sent by at least one UE corresponding to the first beam within the polling time of the first beam; or
sending, by the base station, downlink control information to at least one UE corresponding to a first beam within polling time of the first beam; where
the first beam is a beam in a first beam set, and the first beam set includes beams corresponding to the plurality of UEs in the configured available beams.

With reference to the first aspect, in a second implementation of the first aspect, the plurality of beams are beams corresponding to the plurality of UEs in configured available beams, and before the receiving or sending, by the base station, the control information of the plurality of UEs within the polling time of the plurality of beams, the method further includes:
sending, by the base station, a broadcast message to the plurality of UEs, where the broadcast message is used to notify a quantity of beams corresponding to the plurality of UEs, and the quantity of beams corresponding to the plurality of UEs is used by the plurality of UEs to determine the polling time of the beams corresponding to the plurality of UEs; and
the receiving or sending, by the base station, the control information of the plurality of UEs within the polling time of the plurality of beams includes:
   receiving, by the base station within polling time of a second beam, uplink control information sent by at least one UE corresponding to the second beam within the polling time of the beams corresponding to the plurality of UEs; or
   sending, by the base station, downlink control information to at least one UE corresponding to a second beam within polling time of the second beam; where
   the second beam is a beam in the beams corresponding to the plurality of UEs.

With reference to the first aspect, in a third implementation of the first aspect, the plurality of beams are beams corresponding to the plurality of UEs in configured available beams, and before the receiving or sending, by the base station, the control information of the plurality of UEs within the polling time of the plurality of beams, the method further includes:
sending, by the base station, indication information to each of the plurality of UEs, where the indication information is used to indicate a polling sequence of a beam corresponding to each of the plurality of UEs in the beams corresponding to the plurality of UEs; and
the receiving or sending, by the base station, the control information of the plurality of UEs within the polling time of the plurality of beams includes:
   receiving, by the base station within polling time of a third beam, uplink control information sent by at least one UE corresponding to the third beam within the polling time of the third beam; or
   sending, by the base station, downlink control information to at least one UE corresponding to a third beam within polling time of the third beam; where
   the third beam is a beam in the beams corresponding to the plurality of UEs, and the polling time of the third beam is determined by the at least one UE corresponding to the third beam according to a polling sequence of the third beam.

According to a second aspect, a method for transmitting control information in a wireless communications system is provided, where the method includes:
determining, by UE, a time domain resource used by a control channel, where the control channel is configured to transmit control information of a plurality of UEs, the UE is one of the plurality of UEs, and the time domain resource includes polling time of a plurality of beams; and
receiving or sending, by the UE, control information of the UE within the polling time of the plurality of beams.

With reference to the second aspect, in a first implementation of the first aspect, the plurality of beams are configured available beams, and the receiving or sending, by the UE, control information of the UE within the polling time of the plurality of beams includes:
determining, by the UE, polling time of a beam corresponding to the UE in the configured available beams according to a beam identifier ID of the beam corresponding to the UE; and
receiving or sending, by the UE, the control information of the UE within the polling time of the beam corresponding to the UE.

With reference to the second aspect, in a second implementation of the second aspect, the plurality of beams are beams corresponding to the plurality of UEs in configured available beams, and before the receiving or sending, by the UE, control information of the UE within the polling time of the plurality of beams, the method further includes:
receiving, by the UE, a broadcast message sent by a base station, where the broadcast message is used to notify a quantity of beams corresponding to the plurality of UEs; and
the receiving or sending, by the UE, control information of the UE within the polling time of the plurality of beams includes:
   determining, by the UE, the polling time of the beams corresponding to the plurality of UEs according to the quantity of beams corresponding to the plurality of UEs; and
   receiving or sending, by the UE, the control information of the UE within the polling time of the beams corresponding to the plurality of UEs.

With reference to the second aspect, in a third implementation of the second aspect, the plurality of beams are beams corresponding to the plurality of UEs in configured available beams, and before the receiving or sending, by the UE, control information of the UE within the polling time of the plurality of beams, the method further includes:
receiving, by the UE, indication information sent by a base station, where the indication information is used to indicate a polling sequence of a beam corresponding to the UE in the beams corresponding to the plurality of UEs;
the receiving or sending, by the UE, control information of the UE within the polling time of the plurality of beams includes:
   determining, by the UE, polling time of the beam corresponding to the UE in the beams corresponding to the plurality of UEs according to the polling sequence of the beam corresponding to the UE in the beams corresponding to the plurality of UEs; and
   receiving or sending, by the UE, the control information of the UE within the polling time of the beam corresponding to the UE.

According to a third aspect, a base station is provided, including:
a determining module, configured to determine a time domain resource used by a control channel, where the control channel is configured to transmit control information of a plurality of UEs, and the time domain resource includes polling time of a plurality of beams; and
a transceiving module, configured to receive or send the control information of the plurality of UEs within the polling time of the plurality of beams included in the time domain resource determined by the determining module, where control information of each of the plurality of UEs is transmitted through a beam corresponding to the UE.

With reference to the third aspect, in a first implementation of the third aspect, the plurality of beams are configured available beams, and the transceiving module is specifically configured to:
receive, within polling time of a first beam, uplink control information sent by at least one UE corresponding to the first beam within the polling time of the first beam; or
send downlink control information to at least one UE corresponding to a first beam within polling time of the first beam; where
the first beam is a beam in a first beam set, and the first beam set includes beams corresponding to the plurality of UEs in the configured available beams.

With reference to the third aspect, in a second implementation of the third aspect, the plurality of beams are beams corresponding to the plurality of UEs in configured available beams, and the base station further includes:
a first sending module, configured to send a broadcast message to the plurality of UEs, where the broadcast message is used to notify a quantity of beams corresponding to the plurality of UEs, and the quantity of beams corresponding to the plurality of UEs is used by the plurality of UEs to determine the polling time of the beams corresponding to the plurality of UEs; and
the transceiving module is specifically configured to:
   receive, within polling time of a second beam, uplink control information sent by at least one UE corresponding to the second beam within the polling time of the beams corresponding to the plurality of UEs; or
   send downlink control information to at least one UE corresponding to a second beam within polling time of the second beam; where
   the second beam is a beam in the beams corresponding to the plurality of UEs.

With reference to the third aspect, in a third implementation of the third aspect, the plurality of beams are beams corresponding to the plurality of UEs in configured available beams, and the base station further includes:
a second sending module, configured to send indication information to each of the plurality of UEs, where the indication information is used to indicate a polling sequence of a beam corresponding to each of the plurality of UEs in the beams corresponding to the plurality of UEs; and
the transceiving module is specifically configured to:
   receive, within polling time of a third beam, uplink control information sent by at least one UE corresponding to the third beam within the polling time of the third beam; or
   send downlink control information to at least one UE corresponding to a third beam within polling time of the third beam; where
   the third beam is a beam in the beams corresponding to the plurality of UEs, and the polling time of the third beam is determined by the at least one UE corresponding to the third beam according to a polling sequence of the third beam.

According to a fourth aspect, user equipment UE is provided, including:
a determining module, configured to determine a time domain resource used by a control channel, where the control channel is configured to transmit control information of a plurality of UEs, the UE is one of the plurality of UEs, and the time domain resource includes polling time of a plurality of beams; and
a transceiving module, configured to receive or send control information of the UE within the polling time of the plurality of beams included in the time domain resource determined by the determining module.

With reference to the fourth aspect, in a first implementation of the fourth aspect, the plurality of beams are configured available beams, and the determining module is further configured to:
determine polling time of a beam corresponding to the UE in the configured available beams according to a beam identifier ID of the beam corresponding to the UE;
the transceiving module is specifically configured to:
   receive or send the control information of the UE within the polling time that is of the beam corresponding to the UE and that is determined by the determining module.

With reference to the fourth aspect, in a second implementation of the fourth aspect, the plurality of beams are beams corresponding to the plurality of UEs in configured available beams, and the UE further includes:
a first receiving module, configured to receive a broadcast message sent by a base station, where the broadcast message is used to notify a quantity of beams corresponding to the plurality of UEs;
the determining module is further configured to:
   determine the polling time of the beams corresponding to the plurality of UEs according to the quantity of beams corresponding to the plurality of UEs; and
   the transceiving module is specifically configured to:
      receive or send the control information of the UE within the polling time that is of the beams corresponding to the plurality of UEs and that is determined by the determining module.

With reference to the fourth aspect, in a third implementation of the fourth aspect, the plurality of beams are beams corresponding to the plurality of UEs in configured available beams, and the UE further includes:
a second receiving module, configured to receive indication information sent by a base station, where the indication information is used to indicate a polling sequence of a beam corresponding to the UE in the beams corresponding to the plurality of UEs;
the determining module is further configured to:
   determine polling time of the beam corresponding to the UE in the beams corresponding to the plurality of UEs according to the polling sequence that is of the beam corresponding to the UE in the beams corresponding to the plurality of UEs and that is indicated by the indication information received by the second receiving module;
   the transceiving module is specifically configured to:
      receive or send the control information of the UE within the polling time that is of the beam corresponding to the UE and that is determined by the determining module.

Based on the foregoing technical solutions, in the method for transmitting control information in a wireless communications system, the base station, and the UE in the embodiments of the present invention, the base station first determines the time domain resource used by the control channel, and receives or sends the control information of the plurality of UEs within the polling time of the plurality of beams included in the time domain resource. This implements control information transmission between the base station and the plurality of UEs.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a frame structure of a 5G high-frequency system according to an embodiment of the present invention;
FIG. 2 is a schematic diagram of time domain resources used by control channels in different cells according to an embodiment of the present invention;
FIG. 3 is a schematic flowchart of a method for transmitting control information in a wireless communications system according to an embodiment of the present invention;
FIG. 4 is a schematic diagram of a method for transmitting control information in a wireless communications system according to an embodiment of the present invention;
FIG. 5 is a schematic diagram of a method for transmitting control information in a wireless communications system according to another embodiment of the present invention;
FIG. 6 is a schematic diagram of a method for transmitting control information in a wireless communications system according to still another embodiment of the present invention;
FIG. 7 is a schematic flowchart of a method for transmitting control information in a wireless communications system according to another embodiment of the present invention;
FIG. 8 is a schematic flowchart of a method for transmitting control information in a wireless communications system according to still another embodiment of the present invention;
FIG. 9 is a schematic block diagram of a base station according to an embodiment of the present invention;
FIG. 10 is a schematic block diagram of UE according to an embodiment of the present invention;
FIG. 11 is a schematic block diagram of a base station according to another embodiment of the present invention; and
FIG. 12 is a schematic block diagram of UE according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: Global System for Mobile Communications (GSM, Global System for Mobile Communications), a Code Division Multiple Access (CDMA, Code Division Multiple Access) system, Wideband Code Division Multiple Access (WCDMA, Wideband Code Division Multiple Access), a general packet radio service (GPRS, General Packet Radio Service), and Long Term Evolution (LTE, Long Term Evolution).

User equipment (UE, User Equipment), also referred to as a mobile terminal (Mobile Terminal), mobile user equipment, or the like, may communicate with one or more core networks by using a radio access network (for example, RAN, Radio Access Network). The UE may be a mobile terminal, such as a mobile phone (also referred to as a "cellular" phone) and a computer with a mobile terminal. For example, the UE may be a portable, pocket-sized, handheld, computer built-in, or in-vehicle mobile apparatus, and exchanges voice and/or data with the radio access network.

A base station may be a base station (BTS, Base Transceiver Station) in GSM or CDMA, or may be a base station (NodeB) in WCDMA, or may be an evolved NodeB (eNB or e-NodeB, evolved NodeB) in LTE, and this is not limited in the present invention. However, for ease of description, the following embodiments are described by using an NodeB as an example.

An embodiment of the present invention provides a method for transmitting control information in a 5G-oriented high-frequency system. Before this embodiment of the present invention is described, a frame structure of the 5G high-frequency system is first described.

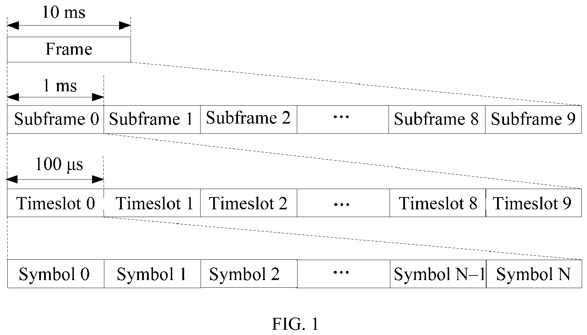

FIG. 1 is a schematic diagram of a frame structure of a 5G high-frequency system. To be compatible with a frame structure of an existing LTE system, the 5G high-frequency system uses a frame length design of the LTE system. A frame (frame) still uses a delay of 10 ms (ms). A frame is divided into 10 subframes (subframe) and each subframe has a delay of 1 ms. The subframe may further be divided into 10 timeslots (slots). Each timeslot may include different quantities of orthogonal frequency division multiplexing (Orthogonal Frequency Division Multiplexing, OFDM) symbols (symbol) due to different working frequencies. In each timeslot, optionally, all the symbols may be used for uplink data transmission or downlink data transmission. According to different uplink and downlink timeslot ratios, different quantities of timeslots in a subframe of 10 timeslots may be separately selected to be used for uplink or downlink data transmission. In this embodiment of the present invention, an uplink-downlink timeslot ratio 5:5 is used as an example. That is, the first five timeslots are used for downlink data transmission, the last five timeslots are used for uplink data transmission, and a period of time is reserved for switching between uplink and downlink timeslots. It should be understood that, the foregoing uplink-downlink timeslot ratio 5:5 is only used as an example in this embodiment of the present invention, and does not constitute any limitation on this embodiment of the present invention. This embodiment of the present invention may further be applied to scenarios in which the uplink-downlink timeslot ratio is 2:3, 3:2, 2:8, 3:7, or the like.

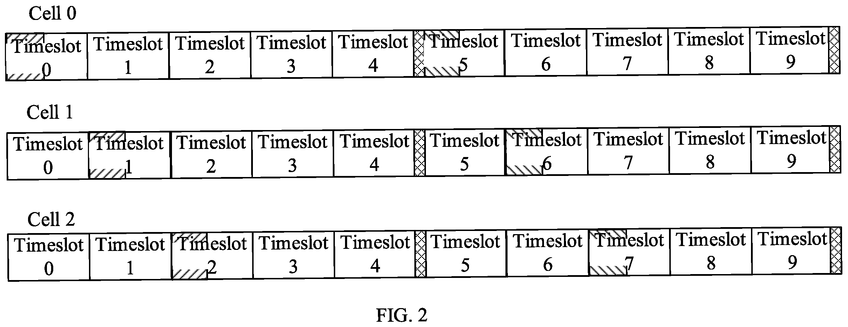

This embodiment of the present invention is further based on the following prerequisite: A connection has been established between a base station and UE. In the high-frequency system, both the base station and the UE may communicate on a plurality of beams. Therefore, a beam identifier (Identifier, ID) of a beam may be used to indicate a beam. The embodiment of this application is based on a prerequisite that synchronization and beam training have been completed between the base station and the UE and an optimal beam pairing is found. A prior-art beam training process is used, and reference may be made to the beam training process described in section 9.35 in the Institute of Electrical and Electronics Engineers (Institute of Electrical and Electronics Engineers, IEEE) 802.11ad standard. Through beam training, both the base station and the UE may know a beam identifier (Identifier, ID) of a beam used for communication between the base station and the UE. The base station and the UE may communicate with each other through a successfully paired beam, and the base station and the UE send and receive control information on a time domain resource specified in the protocol. For example, as shown in FIG. 2, timeslots 0 to 4 are downlink timeslots, and timeslots 5 to 9 are uplink timeslots. 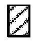 indicates a time domain resource occupied by transmission of downlink control information, 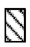 indicates a time domain resource occupied by transmission of uplink control information, and 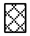 indicates a switching time of uplink and downlink timeslots. For a cell, a time domain resource occupied by a control channel may be several symbols in a timeslot. Optionally, control information transmission may occupy a full frequency band in a frequency domain. In this way, the base station and the UE may complete control information transmission on the time domain resource. To avoid interference between cells, control information of different cells is distinguished. Optionally, control channels of the different cells may be set on different timeslots. As shown in FIG. 2, a downlink control channel of a cell 0 may be set in the first four symbols of the timeslot 0, an uplink control channel may be set in the first four symbols of the timeslot 5; and a downlink control channel of a cell 1 is set in the first four symbols of the timeslot 1, and an uplink control channel is set in the first four symbols of the timeslot 6. In this embodiment of the present invention, the control channels of the different cells are set on different timeslots. In this way, the base station and the UE may determine, according to a cell number, a time domain resource used by a control channel, and receive and send control information on the time domain resource, without the need of performing signaling interaction to obtain time domain resource information used by the control channel and then transmitting the control information. Therefore, extra system overheads caused by complex signaling interaction are avoided.

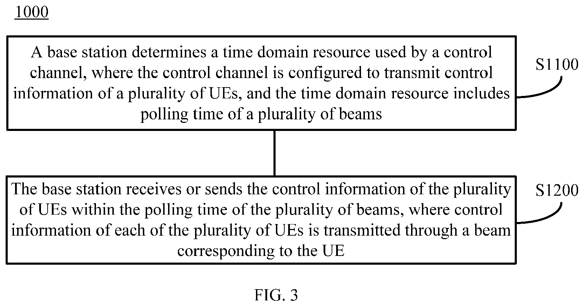

FIG. 3 is a schematic flowchart of a method 1000 for transmitting control information in a wireless communications system according to an embodiment of the present invention. The method 1000 may be executed by a base station and includes the following steps.
S1100. The base station determines a time domain resource used by a control channel, where the control channel is configured to transmit control information of a plurality of UEs, and the time domain resource includes polling time of a plurality of beams.
S1200. The base station receives or sends the control information of the plurality of UEs within the polling time of the plurality of beams, where control information of each UE is transmitted through a beam corresponding to the UE.

Specifically, the base station determines the time domain resource used by the control channel. Optionally, the base station may determine, according to the protocol, which symbols of a timeslot are used by the control channel, and determine, according to a cell number, the timeslot that contains the used time domain resource, to determine a location of the time domain resource used by the control channel in the frame structure. For example, if the protocol defines that the control channel uses the first four symbols of the timeslot and the cell number is 0, optionally, as shown in FIG. 2, the base station may determine that the time domain resource used by the control channel is the first four symbols of a timeslot 0 or the first four symbols of a timeslot 5. The control channel is configured to transmit the control information of the plurality of UEs, that is, the time domain resource is a set of time domain resources occupied by transmission of the control information of the plurality of UEs. Optionally, the time domain resource may be the first four symbols of the timeslot 0 shown in FIG. 2, or the first four symbols of the timeslot 5. This embodiment of the present invention is not limited thereto. Each of the plurality of UEs has a corresponding beam, and the base station transmits the control information to the UE through the beam corresponding to the UE. After determining the time domain resource, the base station may sequentially poll the plurality of beams on the time domain resource, that is, the time domain resource includes the polling time of the plurality of beams. On the time domain resource, each beam has its own polling time, and the time domain resource includes the polling time of each of the plurality of beams. Polling the plurality of beams by the base station indicates that the base station receives or sends control information of at least one UE corresponding to a currently polled beam through the currently polled beam within the polling time of each of the plurality of beams. The base station receives or sends the control information of the plurality of UEs within the polling time of the plurality of beams. Specifically, if a first beam is a beam in the plurality of beams, the base station receives or sends control information of at least one UE corresponding to the first beam within polling time of the first beam. In this way, the base station may receive or send the control information of the UEs corresponding to the plurality of beams by polling the plurality of beams.

Therefore, according to the method for transmitting control information in a wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

Optionally, in this embodiment of the present invention, the plurality of beams may be configured available beams. In this case, that the base station receives or sends the control information of the plurality of UEs within the polling time of the plurality of beams includes:
receiving, by the base station within the polling time of the first beam, uplink control information sent by the at least one UE corresponding to the first beam within the polling time of the first beam; or
sending, by the base station, downlink control information to the at least one UE corresponding to the first beam within the polling time of the first beam; where
the first beam is a beam in a first beam set, and the first beam set includes beams corresponding to the plurality of UEs in the configured available beams.

Specifically, when the plurality of beams are configured available beams, the base station sequentially polls each of the configured available beams. Optionally, the base station may poll each of the configured available beams according to a beam ID of the beam. For example, the base station may sequentially poll each of the configured available beams according to an ascending order of beam IDs, and receive, within the polling time of the first beam, the uplink control information sent by the at least one UE corresponding to the first beam within the polling time of the first beam. Alternatively, the base station may send the downlink control information to the at least one UE corresponding to the first beam within the polling time of the first beam. The first beam is a beam in the first beam set, and the first beam set includes the beams corresponding to the plurality of UEs in the configured available beams. The beams corresponding to the plurality of UEs are a set of beams corresponding to each of the plurality of UEs. The first beam set may be understood as a set of beams successfully paired between the base station and the plurality of UEs, or may also be understood as a set of beams allocated to the plurality of UEs in the configured available beams. Each beam in the first beam set corresponds to at least one UE. The control information is transmitted on the beam in the first beam set. Therefore, the base station may receive or send the control information of the at least one UE corresponding to the beam on the beam in the first beam set. Optionally, the downlink control information may be a set of downlink control information of the at least one UE. Downlink control information of different UEs may be distinguished by using different coding sequences. After receiving the downlink control information, different UEs may decode the downlink control information by using different decoding sequences to obtain their own downlink control information. Optionally, the downlink control information of the different UEs may be distinguished by different frequencies. The downlink control information of the different UEs may be sent in different frequency bands, and the different UEs may receive respective downlink control information in the different frequency bands.

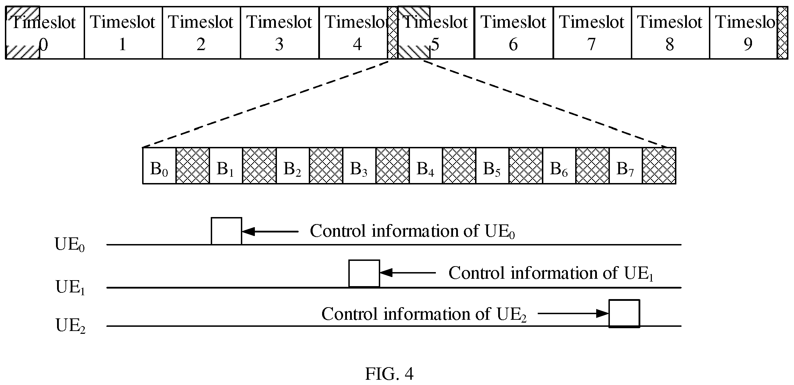

The following describes in detail the method for transmitting control information in a wireless communications system in the foregoing embodiment with reference to FIG. 4. In FIG. 4, the configured available beams include eight beams (beams B₀-B₇), the plurality of UEs include three UEs (UE₀-UE₂), and beams corresponding to the plurality of UEs are a beam B₁, a beam B₃, and a beam B₇. 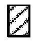 may indicate a time domain resource occupied by transmission of downlink control information. 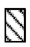 may indicate a time domain resource occupied by transmission of uplink control information. 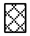 is a switching time between beams, and the beams have a same polling time.

In FIG. 4, a moment corresponding to the time domain resource used by the control channel arrives. For example, for the cell 0 shown in FIG. 2, a moment corresponding to the time domain resource used by the uplink control information may be a moment corresponding to the first four symbols of the timeslot 5, and a moment corresponding to the time domain resource used by the downlink control information may be a moment corresponding to the first four symbols of the timeslot 0. When the moment corresponding to the time domain resource used by the control channel arrives, the base station sequentially polls the eight beams. Optionally, the base station may poll the eight beams in an ascending order of beam IDs, that is, from B₀ to B₇. In the eight beams, the beams B₁, B₃, and B₇ are the beams corresponding to the plurality of UEs, that is, the beam B₁, the beam B₃, and the beam B₇ are beams allocated to the plurality of UEs. Other beams are beams not allocated to UE. The UEs corresponding to the beam B₁, the beam B₃, and the beam B₇ are UE₀, UE₁, and UE₂. When the base station sequentially polls the eight beams in the ascending order of the beam IDs, the base station first polls the beam B₀. Because the beam B₀ is a beam not allocated to the plurality of UEs, no control information is transmitted on the beam B₀ within polling time of the beam B₀. Similarly, this applies to other beams not allocated to the plurality of UEs. The beams have a same polling time, the base station performs polling according to the ascending order of the beam IDs, and the base station and the UE know the ID of their corresponding beam. Therefore, when the base station polls the beam B₁, the UE₀ corresponding to the beam B₁ may determine that polling time of the beam B₁ has arrived according to an ID of the beam B₁ corresponding to the UE₀. In this way, control information may be transmitted between the base station and the UE₀ within the polling time of the beam B₁. Optionally, when the time domain resource is the time domain resource used by the uplink control information, the base station may receive, within the polling time of the beam B₁, the uplink control information sent by the UE₀ within the polling time of the beam B₁. When the time domain resource is the time domain resource used by the downlink control information, the base station may send the downlink control information to the UE₀ within the polling time of the beam B₁. Similarly, when polling time of the beam B₃ arrives, control information may be transmitted between the base station and the UE₁ corresponding to the beam B₃. When polling time of the beam B₇ arrives, control information may be transmitted between the base station and the UE₂ corresponding to the beam B₇. A detailed process is not described herein. It should be noted that, the UE may determine polling time of a beam corresponding to the UE according to a beam ID, and therefore the UE receives or sends the control information within the polling time of the beam corresponding to the UE.

Optionally, in the embodiment shown in FIG. 4, the beam B₃ may correspond to the UE₁ and may also correspond to UE₃ and UE₄. That is, the beam B₃ may support transmission of control information of the UE₁, the UE₃, and the UE₄. In this case, for uplink control information transmission, the base station receives the control information of the UE₁, the UE₃, and the UE₄ within the polling time of the beam B₃. To avoid interference between different UEs, optionally, control information of different UEs may be distinguished by using different coding sequences. For downlink control information transmission, the base station sends downlink control information to the UE₁, the UE₃, and the UE₄ within the polling time of the beam B₃. Optionally, the downlink control information may be a set of the downlink control information of the UE₁, the UE₃, and the UE₄. The control information of the different UEs may be distinguished by different coding sequences. By means of this, after receiving the downlink control information, the UE₁, the UE₃, and the UE₄ may decode the downlink control information by using different decoding sequences to obtain their own downlink control information. Optionally, the control information of the different UEs may be distinguished by different frequencies, so that the UE₁, the UE₃, and the UE₄ can receive respective downlink control information in different frequency bands.

It should be understood that, this embodiment of the present invention is described by using an example in which the configured available beams include eight beams (beams B₀-B₇) and the plurality of UEs include three UEs (UE₀-UE₂). This is only an example and does not constitute any limitation on this embodiment of the present invention. Alternatively, the plurality of beams in this embodiment of the present invention may include 10 beams, 20 beams, or the like, and the plurality of UEs may include five UEs, 10 UEs, or the like. It should also be understood that, this embodiment of the present invention is described by using an example in which the time domain resource used by the control channel is the first four symbols of the timeslot 5, and this embodiment of the present invention is not limited thereto. Alternatively, the time domain resource in this embodiment of the present invention may be the first six symbols of the timeslot 6, the first four symbols of the timeslot 9, or the like.

The plurality of beams to be polled by the base station may be the configured available beams, that is, the plurality of beams may include a beam having no corresponding UE. The beam is a beam not allocated to the plurality of UEs. When the base station polls the beam not allocated to the plurality of UEs, no control information is transmitted on the beam. This means that some redundant beams exist in the configured available beams polled by the base station. In this case, the plurality of beams polled by the base station may be beams corresponding to the plurality of UEs in the configured available beams. That is, the plurality of beams are a set of beams allocated to the plurality of UEs. In this case, before the base station receives or sends the control information of the plurality of UEs within the polling time of the plurality of beams, the method 1000 may further include:
sending, by the base station, a broadcast message to the plurality of UEs, where the broadcast message is used to notify a quantity of beams corresponding to the plurality of UEs, and the quantity of beams corresponding to the plurality of UEs is used by the plurality of UEs to determine the polling time of the beams corresponding to the plurality of UEs;
that the base station receives or sends the control information of the plurality of UEs within the polling time of the plurality of beams includes:
   receiving, by the base station within polling time of a second beam, uplink control information sent by at least one UE corresponding to the second beam within the polling time of the beams corresponding to the plurality of UEs; or
   sending, by the base station, downlink control information to at least one UE corresponding to a second beam within polling time of the second beam; where
   the second beam is a beam in the beams corresponding to the plurality of UEs.

Specifically, when the plurality of beams are the beams corresponding to the plurality of UEs in the configured available beams, that is, the plurality of beams to be polled by the base station are beams actually allocated to the plurality of UEs, or the beams to be polled by the base station are not all the configured available beams, but are the beams corresponding to the plurality of UEs in the configured available beams, the base station does not need to poll the beams that are not allocated to the plurality of UEs. A waste of system resources is avoided. In this case, the beam IDs of the beams that correspond to the plurality of UEs and that are to be polled by the base station may not be consecutive, and the UEs cannot determine the polling time of the corresponding beams according to the beam IDs. Optionally, the base station may send the broadcast message to the plurality of UEs. The broadcast message is used to notify a quantity of beams corresponding to the plurality of UEs, and the quantity of beams corresponding to the plurality of UEs is used by the plurality of UEs to determine the polling time of the beams corresponding to the plurality of UEs. In this case, optionally, for uplink control information transmission, the base station receives, within the polling time of the second beam, the uplink control information sent by the at least one UE corresponding to the second beam within the polling time of the beams corresponding to the plurality of UEs, that is, the at least one UE corresponding to the second beam repeatedly sends the uplink control information to the base station within the polling time of each of the beams corresponding to the plurality of UEs. The second beam is a beam in the beams corresponding to the plurality of UEs. In this case, although the at least one UE does not know the polling time of the second beam, the uplink control information is repeatedly sent within the polling time of each beam, and when the base station polls the second beam, the base station may receive the uplink control information sent by the at least one UE. For downlink control information transmission, the base station sends the downlink control information to the at least one UE corresponding to the second beam within the polling time of the second beam. Optionally, the downlink control information may include downlink control information of each of the at least one UE, that is, the downlink control information may be a set of the downlink control information of the at least one UE. The downlink control information of different UEs in the at least one UE may be distinguished by using different coding sequences. Therefore, after receiving the downlink control information, the different UEs may decode the downlink control information by using different decoding sequences to obtain their own downlink control information. Optionally, the downlink control information of the different UEs may be distinguished by different frequencies. The downlink control information of the different UEs may be sent in different frequency bands, and the different UEs may receive respective downlink control information in the different frequency bands. UE does not know when polling time of its corresponding beam arrives. Optionally, the UE keeps in a state of receiving downlink control information in the polling time of each of the beams corresponding to the plurality of UEs, so that the base station can receive the downlink control information of the UE when the base station polls the beam corresponding to the UE.

Optionally, in this embodiment of the present invention, the broadcast message may be used to notify other information, as long as the information is used to determine the polling time of the beams corresponding to the plurality of UEs. This falls within the protection scope of this embodiment of the present invention. For example, the broadcast message may be used to directly notify the polling time of the beams corresponding to the plurality of UEs, that is, the base station may directly use the broadcast message to notify the polling time of the beams corresponding to the plurality of UEs. Optionally, the base station may notify which symbols are occupied by the polling time of the beams corresponding to the plurality of UEs. Therefore, the plurality of UEs do not need to determine the polling time of the beams corresponding to the plurality of UEs according to the quantity of beams corresponding to the plurality of UEs, but can directly obtain the polling time of the beams corresponding to the plurality of UEs according to the broadcast message. Then the control information is transmitted within the polling time of the beams corresponding to the plurality of UEs.

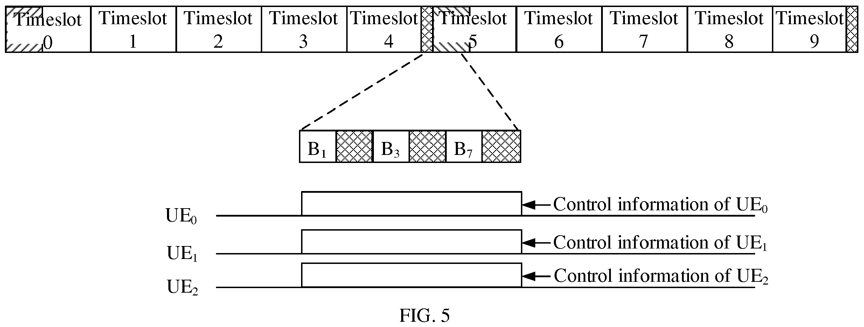

The following describes in detail the method for transmitting control information in a wireless communications system in the foregoing embodiment with reference to FIG. 5. In FIG. 5, the configured available beams include eight beams (beams B₀-B₇), the plurality of beams are beams (including three beams: B₁, B₃, and B₇) corresponding to the plurality of UEs in the configured available beams, and the plurality of UEs include three UEs (UE₀-UE₂). 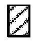 indicates a time domain resource occupied by transmission of downlink control information. 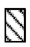 indicates a time domain resource occupied by transmission of uplink control information. 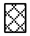 is a switching time between beams, and the beams have a same polling time.

In FIG. 5, when the moment of the time domain resource used by the control channel arrives, for example, when the moment corresponding to the first four symbols of the timeslot 5 arrives, the base station polls three beams corresponding to the three UEs. The UEs corresponding to the beams B₁, B₃, and beam B₇ are UE₀, UE₁, and UE₂. Before transmitting the control information to the UE, the base station first sends the broadcast message to the plurality of UEs. The broadcast message is used to notify the plurality of UEs of the quantity of beams that correspond to the plurality of UEs and that are to be polled by the base station. The quantity of beams corresponding to the plurality of UEs is used for the plurality of UEs to determine the polling time of the beams corresponding to the plurality of UEs. Optionally, the base station may further sequentially poll the beams in an ascending order of the beam IDs. That is, polling is performed in an order of B₁, B₃, and B₇. The base station first polls the beam B₁. The beam B₁ corresponds to the UE₀ and the UE₀ does not know when the polling time of the corresponding beam B₁ arrives. The beams have a same polling time. The UE₀ may obtain the quantity of beams to be polled by the base station, and therefore the UE₀ may determine the polling time of the beams corresponding to the plurality of UEs according to the quantity of beams to be polled by the base station. Then, the UE₀ may repeatedly send the uplink control information to the base station within the polling time of the beams corresponding to the plurality of UEs, to ensure that the base station can receive the uplink control information of the UE₀. That is, the UE₀ repeatedly sends the uplink control information to the base station on its corresponding beam B₁ from the polling time of the first beam in the beams corresponding to the plurality of UEs. This is the same for the UE₁ and the UE₂, and details are not repeated herein. For the base station, when the time domain resource is the time domain resource used by the uplink control information, the base station receives, by polling the beams B₁, B₃, and B₇, the uplink control information sent by the UE₀, the UE₁, and the UE₂. When the time domain resource is the time domain resource used by the downlink control information, the UE does not know when the polling time of its corresponding beam arrives, either. The UE keeps in a state of receiving the downlink control information in the polling time of each of the beams corresponding to the plurality of UEs. In this way, when the base station polls the beam corresponding to the UE, the UE may receive the downlink control information of the UE. For the base station, the base station sends downlink control information to at least one UE corresponding to a currently polled beam through the currently polled beam within the polling time of each beam. Optionally, the downlink control information may include downlink control information of each of the at least one UE. After the at least one UE receives the downlink control information, different UEs may decode the downlink control information by using different decoding sequences to obtain their own downlink control information. Optionally, the downlink control information of the at least one UE may be distinguished by different frequencies. The downlink control information of the different UEs may be sent in different frequency bands, and the different UEs may receive respective downlink control information in the different frequency bands.

It should be understood that, this embodiment of the present invention is described by using an example in which the beams corresponding to the plurality of UEs include three beams (the beams B₁, B₃, and B₇) and the plurality of UEs include three UEs (UE₀-UE₂). This is only an example and does not constitute any limitation on this embodiment of the present invention. Alternatively, the plurality of beams in this embodiment of the present invention may include 10 beams, 20 beams, or the like, and the plurality of UEs may include five UEs, 10 UEs, or the like. It should also be understood that, this embodiment of the present invention is described by using an example in which the time domain resource used by the control channel is the first four symbols of the timeslot 5, and this embodiment of the present invention is not limited thereto. Alternatively, the time domain resource in this embodiment of the present invention may be the first six symbols of the timeslot 6, the first four symbols of the timeslot 9, or the like.

When the plurality of beams to be polled by the base station are the beams corresponding to the plurality of UEs in the configured available beams, optionally, in this embodiment of the present invention, before the base station receives or sends the control information of the plurality of UEs within the polling time of the plurality of beams, the method 1000 may further include:
sending, by the base station, indication information to each of the plurality of UEs, where the indication information is used to indicate a polling sequence of a beam corresponding to each of the plurality of UEs in the beams corresponding to the plurality of UEs;
that the base station receives or sends the control information of the plurality of UEs within the polling time of the plurality of beams includes:
   receiving, by the base station within polling time of a third beam, uplink control information sent by at least one UE corresponding to the third beam within the polling time of the third beam; or
   sending, by the base station, downlink control information to at least one UE corresponding to a third beam within polling time of the third beam; where
   the third beam is a beam in the beams corresponding to the plurality of UEs, and the polling time of the third beam is determined by the at least one UE corresponding to the third beam according to a polling sequence of the third beam.

Specifically, when the UE does not know a polling sequence of its corresponding beam, the UE repeatedly sends or receives the control information within the polling time of each of the plurality of beams. Optionally, in this embodiment of the present invention, the base station may send the indication information to each of the plurality of UEs to indicate the polling sequence of the beam corresponding to each of the plurality of UEs in the beams allocated to the plurality of UEs. Because the beams have a same polling time, the UE may determine the polling time of the beam corresponding to the UE according to the polling sequence, and may receive or send the control information within the polling time of its corresponding beam, instead of repeatedly receiving or sending the control information within the polling time of each beam. Optionally, for uplink control information transmission, the base station receives, within the polling time of each of the beams corresponding to the plurality of UEs, uplink control information sent by at least one UE corresponding to a currently polled beam through the currently polled beam. For example, the base station receives, within the polling time of the third beam, the uplink control information sent by the at least one UE corresponding to the third beam within the polling time of the third beam. The third beam is a beam in the beams allocated to the plurality of UEs. For downlink control information transmission, the base station sends, through the currently polled beam, downlink control information to the at least one UE corresponding to the currently polled beam within the polling time of each of the beams corresponding to the plurality of UEs. For example, the base station sends the downlink control information to the at least one UE corresponding to the third beam within the polling time of the third beam. Optionally, the downlink control information may include downlink control information of each of the at least one UE. That is, the downlink control information may be a set of the downlink control information of the at least one UE. Downlink control information of different UEs may be distinguished by using different coding sequences. After receiving the downlink control information, the at least one UE may decode the downlink control information by using different decoding sequences to obtain their own downlink control information. Optionally, the downlink control information of the at least one UE may be distinguished by different frequencies. The downlink control information of the different UEs may be sent in different frequency bands, and the different UEs may receive respective downlink control information in the different frequency bands.

Optionally, in this embodiment of the present invention, the indication information may be used to indicate other information, as long as the information is used to determine the polling time of the beam corresponding to each of the plurality of UEs. This falls within the protection scope of this embodiment of the present invention. For example, the indication information may directly indicate the polling time of the beam corresponding to each of the plurality of UEs. Optionally, the base station may notify which symbols are occupied by the polling time of the beam corresponding to each of the plurality of UEs. Therefore, each UE does not need to determine the polling time of the beam corresponding to each UE according to the polling sequence of the beam corresponding to each UE, but may directly obtain the polling time of the beam corresponding to each UE according to the indication information.

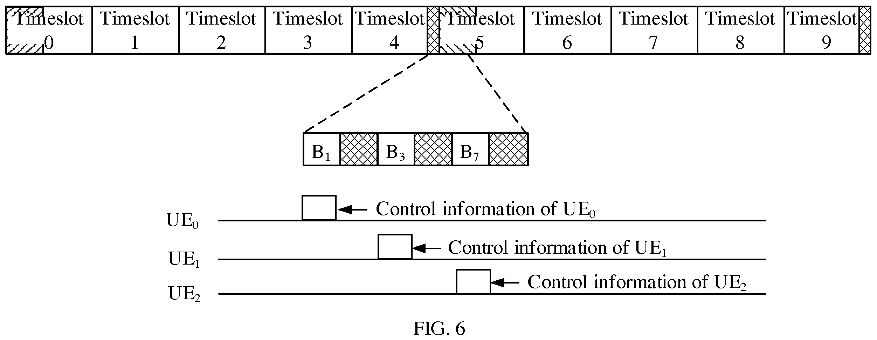

The following describes in detail the method for transmitting control information in a wireless communications system in the foregoing embodiment with reference to FIG. 6. In FIG. 6, the plurality of beams are the beams (including three beams: B₁, B₃, and B₇) corresponding to the plurality of UEs in the configured available beams, the plurality of UEs include three UEs (UE₀-UE₂), and the UEs corresponding to the beams B₁, B₃, and B₇ are UE₀, UE₁, and UE₂. In FIG. 6, 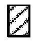 indicates a time domain resource occupied by transmission of downlink control information. 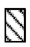 indicates a time domain resource occupied by transmission of uplink control information. 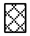 is a switching time between beams, and the beams have a same polling time.

In FIG. 6, when the moment of the time domain resource used by the control channel arrives, for example, when the moment corresponding to the first four symbols of the timeslot 5 arrives, the base station polls the three beams (the beams B₁, B₃, and B₇). Optionally, the base station may further sequentially poll the beams in an ascending order of the beam IDs. That is, polling is sequentially performed according to an order of B₁, B₃, and B₇. Before the base station starts transmitting the control information to the UE, the base station sends the indication information to each of the plurality of UEs. The indication information indicates the polling sequence of the beam corresponding to each of the plurality of UEs. In this way, the UE may determine the polling time of its corresponding beam according to the polling sequence. The beams corresponding to the plurality of UEs may have different polling sequences. Therefore, the indication information that indicates the polling sequences of the beams corresponding to the UEs is separately sent by the base station to the UEs. For example, when the base station sequentially polls the three beams according to the order of B₁, B₃, and B₇, polling sequences indicated by indication information sent by the base station to the UE₀, the UE₁, and the UE₂ corresponding to the beams B₁, B₃, and B₇ may be 1, 2, and 3. After receiving the indication information, the UE₀, the UE₁, and the UE₂ each may determine a polling sequence of its corresponding beam according to the polling sequence indicated by the indication information. Therefore, when the first beam polled by the base station is the beam B₁, the base station may receive, through the beam B₁, the uplink control information sent by the UE₀ within the polling time of the beam B₁ or send the downlink control information to the UE₀. This is the same for the UE₁ and the UE₂, and details are not repeated herein.

It should be understood that, this embodiment of the present invention is described by using an example in which the plurality of beams include three beams (the beams B₁, B₃, and B₇) and the plurality of UEs include three UEs (UE₀-UE₂). This is only an example and does not constitute any limitation on this embodiment of the present invention. Alternatively, the plurality of beams in this embodiment of the present invention may include 10 beams, 20 beams, or the like, and the plurality of UEs may include five UEs, 10 UEs, or the like. It should also be understood that, this embodiment of the present invention is described by using an example in which the time domain resource used by the control channel is the first four symbols of the timeslot 5, and this embodiment of the present invention is not limited thereto. Alternatively, the time domain resource in this embodiment of the present invention may be the first six symbols of the timeslot 6, the first four symbols of the timeslot 9, or the like.

Therefore, according to the method for transmitting control information in a wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

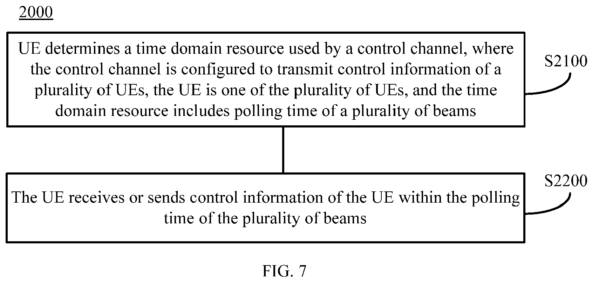

With reference to FIG. 3 to FIG. 6, the foregoing describes in detail the method for transmitting control information in a wireless communications system according to this embodiment of the present invention from the perspective of the base station. The following describes, with reference to FIG. 7, a method for transmitting control information in a wireless communications system according to an embodiment of the present invention from the perspective of UE.

FIG. 7 is a schematic block diagram of a method 2000 for transmitting control information in a wireless communications system according to an embodiment of the present invention. The method 2000 may be executed by UE and includes the following steps.
S2100. The UE determines a time domain resource used by a control channel, where the control channel is configured to transmit control information of a plurality of UEs, the UE is one of the plurality of UEs, and the time domain resource includes polling time of a plurality of beams.
S2200. The UE receives or sends control information of the UE within the polling time of the plurality of beams.

Specifically, the UE determines the time domain resource used by the control channel. Optionally, the UE may determine, according to the protocol, which symbols of a timeslot are used by the control channel, and determine, according to a cell number, the timeslot that contains the used time domain resource, to determine a location of the time domain resource used by the control channel in a frame structure. For example, if the protocol defines that the control channel uses the first four symbols of the timeslot and the cell number is 0, optionally, as shown in FIG. 2, the UE may determine that the time domain resource used by the control channel is the first four symbols of a timeslot 0 or the first four symbols of a timeslot 5. The control channel is configured to transmit the control information of the plurality of UEs, that is, the time domain resource is a set of time domain resources occupied by transmission of the control information of the plurality of UEs. The UE is one of the plurality of UEs. Optionally, the time domain resource may be the first four symbols of the timeslot 0 shown in FIG. 2, or the first four symbols of the timeslot 5. This embodiment of the present invention is not limited thereto. Each of the plurality of UEs has a corresponding beam, and a base station transmits the control information to the UE through the beam corresponding to the UE. The time domain resource includes the polling time of the plurality of beams, that is, the base station implements control information transmission with the plurality of UEs by polling the plurality of beams. The UE receives or sends the control information of the UE through the beam corresponding to the UE within the polling time of the plurality of beams. Optionally, when the time domain resource is a time domain resource used by uplink control information, the UE may receive, within the polling time of the plurality of beams, the uplink control information to the base station through the beam corresponding to the UE. When the time domain resource is a time domain resource used by downlink control information, the UE may receive, within the polling time of the plurality of beams, the downlink control information sent by the base station through the beam corresponding to the UE.

Therefore, according to the method for transmitting control information in a wireless communications system in this embodiment of the present invention, the UE first determines the time domain resource used by the control channel, and receives or sends the control information of the UE within the polling time of the plurality of beams included in the time domain resource. This implements control information transmission between the base station and the UE.

Optionally, in this embodiment of the present invention, the plurality of beams may be configured available beams. That the UE receives or sends control information of the UE within the polling time of the plurality of beams may include:
determining, by the UE, polling time of the beam corresponding to the UE in the configured available beams according to a beam ID of the beam corresponding to the UE; and
receiving or sending, by the UE, the control information of the UE within the polling time of the beam corresponding to the UE.

Specifically, when the plurality of beams are the configured available beams, that is, the plurality of beams to be polled by the base station are the configured available beams, optionally, the base station may poll the plurality of beams according to beam IDs. For example, the base station may sequentially poll the plurality of beams according to an ascending order of the beam IDs. Because the beams have a same polling time, the UE may determine the polling time of the beam corresponding to the UE according to the beam ID of its corresponding beam. For example, if the beam ID of the beam corresponding to the UE is 2 and the beam IDs start from 0, the beam corresponding to the UE is the third one to be polled. Because the beams have the same polling time, the UE may determine the polling time of its corresponding beam. After the polling time of the beam corresponding to the UE is determined, the UE may receive or send the control information of the UE within the polling time of the beam corresponding to the UE. Optionally, when the time domain resource is the time domain resource used by the uplink control information, the UE may send, within the polling time of the beam corresponding to the UE, the uplink control information to the base station through the beam corresponding to the UE. When the time domain resource is the time domain resource used by the downlink control information, the UE may receive, within the polling time of the beam corresponding to the UE, the downlink control information sent by the base station through the beam corresponding to the UE.

For example, as shown in FIG. 4, if the UE is UE₁, a beam corresponding to the UE₁ is a beam B₃. According to the beam ID, the UE may know that its corresponding beam is the fourth one to be polled. After the UE determines the time domain resource used by the control channel, for example, the first four symbols of the timeslot 5, the UE may determine polling time of the beam B₃ in polling time of eight beams included in the time domain resource, and receive, within the polling time of the beam B₃, downlink control information sent by the base station or send uplink control information to the base station through the beam B₃.

Optionally, in this embodiment of the present invention, when the plurality of beams are the beams corresponding to the plurality of UEs in the configured available beams, before the UE receives or sends control information of the UE within the polling time of the plurality of beams, the method 2000 may further include:
receiving, by the UE, a broadcast message sent by a base station, where the broadcast message is used to notify a quantity of beams corresponding to the plurality of UEs; and
that the UE receives or sends control information of the UE within the polling time of the plurality of beams may include:
   determining, by the UE, the polling time of the beams corresponding to the plurality of UEs according to the quantity of beams corresponding to the plurality of UEs; and
   receiving or sending, by the UE, the control information of the UE within the polling time of the beams corresponding to the plurality of UEs.

Specifically, when the plurality of beams are the beams corresponding to the plurality of UEs in the configured available beams, that is, the plurality of beams to be polled by the base station are beams actually allocated to the plurality of UEs. In this case, the beam IDs of the beams corresponding to the plurality of UEs may not be consecutive, and the UEs cannot determine the polling time of the corresponding beams according to the beam IDs. In this case, optionally, the UE may receive the broadcast message sent by the base station. The broadcast message is used to notify the UE of the quantity of beams corresponding to the plurality of UEs. The UE may determine the polling time of the beams corresponding to the plurality of UEs based on the quantity of beams corresponding to the plurality of UEs, and receive or send the control information of the UE within the polling time of the beams corresponding to the plurality of UEs. For uplink control information transmission, the UE repeatedly sends the uplink control information to the base station within the polling time of each of the beams corresponding to the plurality of UEs. In this way, because the uplink control information is repeatedly sent within the polling time of each beam, when the base station polls the beam corresponding to the UE, the base station may receive the uplink control information of the UE although the UE does not know the polling time of its corresponding beam. For downlink control information transmission, the UE does not know when the polling time of its corresponding beam arrives, either. Optionally, the UE keeps in a state of receiving the downlink control information within the polling time of each of the beams corresponding to the plurality of UEs, so that the UE can receive the downlink control information of the UE when the base station polls the beam corresponding to the UE. If the beam corresponding to the UE supports transmission of control information of a plurality of UEs, optionally, the downlink control information received by the UE may include downlink control information of each of the plurality of UEs, that is, the downlink control information is a set of the downlink control information of the plurality of UEs. Downlink control information of different UEs may be distinguished by different coding sequences. After receiving the downlink control information, the UE may decode the downlink control information by using its decoding sequence, to obtain its downlink control information. Optionally, the downlink control information of the at least one UE may be distinguished by different frequencies. The downlink control information of the different UEs may be sent in different frequency bands, and the different UEs may receive respective downlink control information in the different frequency bands.

For example, as shown in FIG. 5, if the UE is the UE₁, the beam corresponding to the UE₁ is the beam B₃. The beams to be polled by the base station are B₁, B₃, and B₇, and the beam IDs of the polled beams are not consecutive. Therefore, the UE cannot know the polling time of the beam B₃ according to the beam ID, and the UE repeatedly sends the uplink control information to the base station within polling time of each of the three beams. Alternatively, the UE keeps in a state of receiving the downlink control information within the polling time of each of the three beams, and receives the downlink control information of the UE.

Optionally, in this embodiment of the present invention, when the plurality of beams are the beams corresponding to the plurality of UEs in the configured available beams, before the UE receives or sends control information of the UE within the polling time of the plurality of beams, the method 2000 may further include:
receiving, by the UE, indication information sent by the base station, where the indication information is used to indicate a polling sequence of the beam corresponding to the UE in the beams corresponding to the plurality of UEs; and
that the UE receives or sends control information of the UE within the polling time of the plurality of beams may include:
   determining, by the UE, the polling time of the beam corresponding to the UE in the beams corresponding to the plurality of UEs according to the polling sequence of the beam corresponding to the UE in the beams corresponding to the plurality of UEs; and
   receiving or sending, by the UE, the control information of the UE within the polling time of the beam corresponding to the UE.

Specifically, when the UE does not know the polling sequence of its corresponding beam, the UE repeatedly sends or receives the control information within the polling time of each of the plurality of beams. Optionally, in this embodiment of the present invention, the UE may receive the indication information sent by the base station. The indication information is used to indicate the polling sequence of the beam corresponding to the UE in the beams corresponding to the plurality of UEs. Therefore, the UE may determine the polling time of the beam corresponding to the UE according to the polling sequence, and send or receive the control information of the UE within the polling time of the beam corresponding to the UE, instead of repeatedly sending or receiving the control information of the UE within the polling time of each beam. Optionally, for uplink control information transmission, the UE sends the uplink control information to the base station through the beam corresponding to the UE within the polling time of the beam corresponding to the UE. For downlink control information, the UE receives, within the polling time of the beam corresponding to the UE, the downlink control information sent by the base station through the beam corresponding to the UE. If the beam corresponding to the UE supports transmission of control information of a plurality of UEs, optionally, the downlink control information received by the UE may include downlink control information of each of the plurality of UEs, that is, the downlink control information is a set of the downlink control information of the plurality of UEs. Downlink control information of different UEs may be distinguished by different coding sequences. After receiving the downlink control information, the UE may decode the downlink control information by using its decoding sequence, to obtain its downlink control information. Optionally, the downlink control information of the at least one UE may be distinguished by different frequencies. The downlink control information of the different UEs may be sent in different frequency bands, and the different UEs may receive respective downlink control information in the different frequency bands.

For example, as shown in FIG. 6, when the UE is UE₂, optionally the indication information may indicate that a polling sequence of the beam corresponding to the UE is 3, that is, the beam corresponding to the UE is the third one to be polled. The UE may determine the polling time of the beam corresponding to the UE according to the polling sequence indicated by the indication information, and the UE may send or receive the control information of the UE through the beam corresponding to the UE within the polling time of the beam corresponding to the UE.

Therefore, according to the method for transmitting control information in a wireless communications system in this embodiment of the present invention, the UE first determines the time domain resource used by the control channel, and receives or sends the control information of the UE within the polling time of the plurality of beams included in the time domain resource. This implements control information transmission between the base station and the UE.

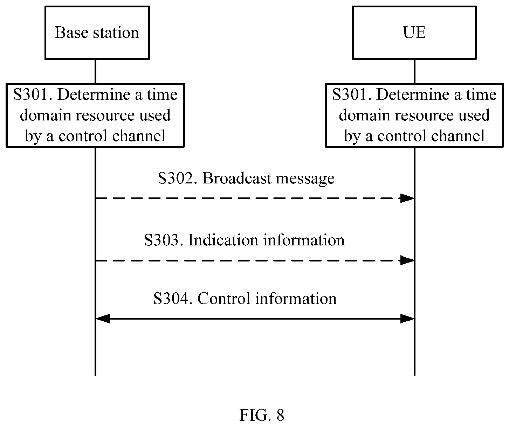

With reference to FIG. 3 to FIG. 7, the foregoing describes in detail the method for transmitting control information in a wireless communications system according to the embodiments of the present invention from the perspectives of the base station and the UE. The following describes, with reference to FIG. 8, a method for transmitting control information in a wireless communications system according to an embodiment of the present invention from the perspective of device interaction.

FIG. 8 is a schematic flowchart of a method for transmitting control information in a wireless communications system according to an embodiment of the present invention.
S301. A base station and UE determine a time domain resource used by a control channel.

Before the base station and the UE transmit control information, the base station and the UE first determine the time domain resource used by the control channel. The control channel is configured to transmit control information of a plurality of UEs, that is, the time domain resource is a set of time domain resources occupied for transmitting the control information of the plurality of UEs. After the base station and the UE determine the time domain resource, the base station and the UE may transmit the control information on the time domain resource. Optionally, the time domain resource may include polling time of a plurality of beams. The base station sends and receives the control information to and from the UEs corresponding to the plurality of beams by polling the plurality of beams, so that the base station can implement control information transmission with the plurality of UEs.

When the plurality of beams are configured available beams, in S304, for the base station, the base station receives, within polling time of a first beam, uplink control information sent by at least one UE corresponding to the first beam within the polling time of the first beam; or
the base station sends downlink control information to at least one UE corresponding to a first beam within the polling time of the first beam; where
the first beam is a beam in a first beam set, and the first beam set includes beams corresponding to the plurality of UEs in the configured available beams.

For the UE, the plurality of beams to be polled by the base station are the configured available beams, and the base station polls the plurality of beams according to an order of beam IDs. Therefore, each of the plurality of UEs may determine polling time of a beam corresponding to the UE according to a beam ID of the beam corresponding to the UE. Optionally, if the time domain resource is a time domain resource used by the uplink control information, the UE may send, within the polling time of its corresponding beam, the uplink control information to the base station. If the time domain resource determined by the UE is a time domain resource used by the downlink control information, the UE may receive, within the polling time of its corresponding beam, the downlink control information sent by the base station. If the beam corresponding to the UE supports transmission of control information of a plurality of UEs, optionally, the downlink control information received by the UE may include downlink control information of each of the plurality of UEs, that is, the downlink control information may be a set of the downlink control information of the plurality of UEs. Downlink control information of different UEs may be distinguished by different coding sequences. After receiving the downlink control information, the UE may decode the downlink control information by using its decoding sequence, to obtain its downlink control information. Optionally, the downlink control information of the at least one UE may be distinguished by different frequencies. The downlink control information of the different UEs may be sent in different frequency bands, and the different UEs may receive respective downlink control information in the different frequency bands.

When the plurality of beams are the beams corresponding to the plurality of UEs in the configured available beams, in S302, the base station sends a broadcast message to the UE, where the broadcast message is used to notify a quantity of beams corresponding to the plurality of UEs.

In this case, in S304, for the base station, when the time domain resource is the time domain resource used by the downlink control information, the base station receives, within polling time of a second beam, uplink control information sent by at least one UE corresponding to the second beam within polling time of the beams corresponding to the plurality of UEs. That is, the at least one UE repeatedly sends the uplink control information to the base station within polling time of each of the beams corresponding to the plurality of UEs. The second beam is a beam in the beams corresponding to the plurality of UEs. For downlink control information transmission, the base station sends downlink control information to the at least one UE corresponding to the second beam within the polling time of the second beam. Optionally, the downlink control information may include downlink control information of each of the at least one UE. That is, the downlink control information may be a set of downlink control information of the at least one UE. Downlink control information of different UEs may be distinguished by different coding sequences. After receiving the downlink control information, the UE may decode the downlink control information by using its own decoding sequence, to obtain its own downlink control information. Optionally, the downlink control information of the at least one UE may be distinguished by different frequencies. The downlink control information of the different UEs may be sent in different frequency bands, and the different UEs may receive respective downlink control information in the different frequency bands.

For the UE, because the plurality of beams are the beams corresponding to the plurality of UEs in the configured available beams, the beam IDs of the beams corresponding to the plurality of UEs may not be consecutive. The UE cannot determine the polling time of its corresponding beam according to the beam ID. In this case, the UE receives or sends the control information of the UE through the beam corresponding to the UE within the polling time of the beams corresponding to the plurality of UEs. That is, for uplink control information transmission, the UE repeatedly sends the uplink control information to the base station within polling time of each of beams allocated to the UE. For downlink control information transmission, the UE keeps in a state of receiving the downlink control information within the polling time of each of the beams allocated to the UE, so that the base station can receive the downlink control information of the UE when the base station polls the beam corresponding to the UE.

Optionally, when the plurality of beams are the beams corresponding to the plurality of UEs in the configured available beams, in S303, the base station sends indication information to the UE, where the indication information indicates a polling sequence of the beam corresponding to the UE in the beams corresponding to the plurality of UEs.

The beams corresponding to the plurality of UEs may have different polling sequences. Therefore, the indication information that indicates the polling sequences of the beams corresponding to the UEs is separately sent by the base station to the UEs. The base station sends indication information to each of the plurality of UEs to indicate a polling sequence of a beam corresponding to the UE, so that the UE may determine polling time of the beam corresponding to the UE according to the polling sequence. Then, the UE may receive or send control information within the polling time of its corresponding beam, instead of repeatedly sending or receiving the control information within the polling time of each beam.

In this case, in S304, the base station receives, within polling time of a third beam, uplink control information sent by at least one UE corresponding to the third beam within the polling time of the third beam; or
sends downlink control information to at least one UE corresponding to a third beam within polling time of the third beam; where
the third beam is a beam in the beams corresponding to the plurality of UEs, and the polling time of the third beam is determined by the at least one UE corresponding to the third beam according to a polling sequence of the third beam.

Therefore, according to the method for transmitting control information in a wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

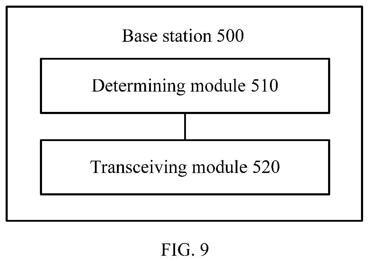

With reference to FIG. 3 to FIG. 8, the foregoing describes in detail the method for transmitting control information in a wireless communications system according to this embodiment of the present invention. The following describes, with reference to FIG. 9 to FIG. 12, an apparatus for transmitting control information in a wireless communications system according to embodiments of the present invention.

FIG. 9 is a schematic block diagram of a base station 500 for transmitting control information in a wireless communications system according to an embodiment of the present invention. The base station 500 includes:
a determining module 510, configured to determine a time domain resource used by a control channel, where the control channel is configured to transmit control information of a plurality of UEs, and the time domain resource includes polling time of a plurality of beams; and
a transceiving module 520, configured to receive or send the control information of the plurality of UEs within the polling time of the plurality of beams included in the time domain resource determined by the determining module 510, where control information of each of the plurality of UEs is transmitted through a beam corresponding to the UE.

Specifically, the determining module 510 determines the time domain resource used by the control channel. Optionally, the determining module 510 may determine, according to the protocol, which symbols of a timeslot are used by the control channel, and determine, according to a cell number, the timeslot that contains the used time domain resource, to determine a location of the time domain resource used by the control channel in a frame structure. For example, if the protocol defines that the control channel uses the first four symbols of the timeslot and the cell number is 0, optionally, as shown in FIG. 2, the determining module 510 may determine that the time domain resource used by the control channel is the first four symbols of a timeslot 0 or the first four symbols of a timeslot 5. The control channel is configured to transmit the control information of the plurality of UEs, that is, the time domain resource is a set of time domain resources occupied by transmission of the control information of the plurality of UEs. Optionally, the time domain resource may be the first four symbols of the timeslot 0 shown in FIG. 2, or the first four symbols of the timeslot 5. This embodiment of the present invention is not limited thereto. Optionally, the time domain resource may include the polling time of the plurality of beams. That is, on the time domain resource, each beam has its own polling time, and the time domain resource includes the polling time of each of the plurality of beams. After the determining module 510 determines the time domain resource, the transceiving module 520 may receive or send the control information of the plurality of UEs within the polling time of the plurality of beams included in the time domain resource. For example, if a first beam is one of the plurality of beams, the transceiving module 520 receives or sends control information of at least one UE corresponding to the first beam within polling time of the first beam. In this way, the transceiving module 520 may receive or send the control information of the UEs corresponding to the plurality of beams within the polling time of the plurality of beams.

Therefore, according to the base station for transmitting the control information in the wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

Optionally, in this embodiment of the present invention, the plurality of beams are configured available beams, and in this case, the transceiving module 520 is specifically configured to:
receive, within the polling time of the first beam, uplink control information sent by the at least one UE corresponding to the first beam within the polling time of the first beam; or
send downlink control information to the at least one UE corresponding to the first beam within the polling time of the first beam; where
the first beam is a beam in a first beam set, and the first beam set includes beams corresponding to the plurality of UEs in the configured available beams.

Specifically, when the plurality of beams are the configured available beams, the transceiving module 520 receives, within the polling time of each of the configured available beams, the uplink control information sent by the at least one UE corresponding to the first beam within the polling time of the first beam, or sends the downlink control information to the at least one UE corresponding to the first beam within the polling time of the first beam. The first beam is a beam in a first beam set, and the first beam set includes beams corresponding to the plurality of UEs in the configured available beams. Optionally, the downlink control information may be a set of downlink control information of the at least one UE. Downlink control information of different UEs may be distinguished by using different coding sequences. After receiving the downlink control information, different UEs may decode the downlink control information by using different decoding sequences to obtain their own downlink control information. Optionally, the downlink control information of the at least one UE may be distinguished by different frequencies. The downlink control information of the different UEs may be sent in different frequency bands, and the different UEs may receive respective downlink control information in the different frequency bands.

Because the plurality of beams are the configured available beams, that is, the plurality of beams may include a beam having no corresponding UE. The beam is a beam not allocated to the plurality of UEs. When the base station polls the beam not allocated to the plurality of UEs, no control information is transmitted on the beam. This means that some redundant beams exist in the configured available beams polled by the base station. In this case, the plurality of beams polled by the base station may be the beams corresponding to the plurality of UEs in the configured available beams. That is, the plurality of beams are a set of beams allocated to the plurality of UEs. In this case, the base station 500 may further include:
a first sending module, configured to send a broadcast message to the plurality of UEs, where the broadcast message is used to notify a quantity of beams corresponding to the plurality of UEs, and the quantity of beams corresponding to the plurality of UEs is used by the plurality of UEs to determine the polling time of the beams corresponding to the plurality of UEs.

In this case, the transceiving module 520 is specifically configured to:
receive, within polling time of a second beam, uplink control information sent by at least one UE corresponding to the second beam within the polling time of each of the beams corresponding to the plurality of UEs; or
send downlink control information to at least one UE corresponding to a second beam within polling time of the second beam; where
the second beam is a beam in the beams corresponding to the plurality of UEs.

Specifically, when the plurality of beams are the beams corresponding to the plurality of UEs in the configured available beams, that is, the plurality of beams to be polled by the base station are beams actually allocated to the plurality of UEs. In this case, the beam IDs of the beams corresponding to the plurality of UEs may not be consecutive, and the UEs cannot determine the polling time of the corresponding beams according to the beam IDs. In this case, optionally, the first sending module may send the broadcast message to the plurality of UEs to notify the plurality of UEs of a quantity of beams actually allocated to the plurality of UEs. In this way, the UE may determine the polling time of the beams corresponding to the plurality of UEs according to the quantity of beams corresponding to the plurality of UEs, and receive or send the control information of the UE within the polling time of the beams corresponding to the plurality of UEs. Optionally, for uplink control information transmission, the transceiving module 520 receives, within the polling time of the second beam, the uplink control information sent by the at least one UE corresponding to the second beam within the polling time of each of the beams corresponding to the plurality of UEs. That is, the at least one UE repeatedly sends the uplink control information to the base station within the polling time of each of the beams corresponding to the plurality of UEs. The second beam is a beam in the beams corresponding to the plurality of UEs. In this case, because the uplink control information is repeatedly sent within the polling time of each beam, when the base station polls the beam corresponding to the UE, the base station may receive the uplink control information of the UE although the UE does not know polling time of its corresponding beam. For downlink control information transmission, the transceiving module 520 sends the downlink control information to the at least one UE corresponding to the second beam within the polling time of the second beam. Optionally, the downlink control information may include downlink control information of each of the at least one UE, that is, the downlink control information may be a set of the downlink control information of the at least one UE. The downlink control information of different UEs may be distinguished by using different coding sequences. After receiving the downlink control information, the different UEs may decode the downlink control information by using different decoding sequences to obtain their own downlink control information. Optionally, the downlink control information of the at least one UE may be distinguished by different frequencies. The downlink control information of the different UEs may be sent in different frequency bands, and the different UEs may receive respective downlink control information in the different frequency bands.

Optionally, in this embodiment of the present invention, the base station 500 may further include:
a second sending module, configured to send indication information to each of the plurality of UEs, where the indication information is used to indicate a polling sequence of a beam corresponding to each of the plurality of UEs in the beams corresponding to the plurality of UEs.

In this case, the transceiving module 520 is specifically configured to:
receive, within polling time of a third beam, uplink control information sent by at least one UE corresponding to the third beam within the polling time of the third beam; or
sends downlink control information to at least one UE corresponding to a third beam within polling time of the third beam; where
the third beam is a beam in the beams corresponding to the plurality of UEs, and the polling time of the third beam is determined by the at least one UE corresponding to the third beam according to a polling sequence of the third beam.

Specifically, when the UE does not know a polling sequence of its corresponding beam, the UE repeatedly sends or receives the control information within the polling time of each of the plurality of beams. Optionally, the second sending module may send the indication information to each of the plurality of UEs to indicate the polling sequence of the beam corresponding to each of the plurality of UEs in the beams corresponding to the plurality of UEs. Because the beams have a same polling time, the UE may determine the polling time of the beam corresponding to the UE according to the polling sequence, and may receive or send the control information within the polling time of its corresponding beam, instead of repeatedly receiving or sending the control information within the polling time of each beam. Optionally, for uplink control information transmission, the transceiving module 520 receives, within the polling time of each of the beams corresponding to the plurality of UEs, uplink control information sent by at least one UE corresponding to a currently polled beam through the currently polled beam. For example, the transceiving module 520 receives, within the polling time of the third beam, the uplink control information sent by the at least one UE corresponding to the third beam within the polling time of the third beam. The third beam is a beam in the beams allocated to the plurality of UEs. For downlink control information transmission, the transceiving module 520 sends, through the currently polled beam, downlink control information to the at least one UE corresponding to the currently polled beam within the polling time of each of the beams corresponding to the plurality of UEs. For example, the transceiving module 520 sends the downlink control information to the at least one UE corresponding to the third beam within the polling time of the third beam. Optionally, the downlink control information includes the downlink control information of each of the at least one UE. That is, the downlink control information may be a set of the downlink control information of the at least one UE. Downlink control information of different UEs may be distinguished by using different coding sequences. After receiving the downlink control information, the at least one UE may decode the downlink control information by using different decoding sequences to obtain their own downlink control information. Optionally, the downlink control information of the at least one UE may be distinguished by different frequencies. The downlink control information of the different UEs may be sent in different frequency bands, and the different UEs may receive respective downlink control information in the different frequency bands.

Therefore, according to the base station for transmitting the control information in the wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

The base station 500 according to this embodiment of the present invention may correspond to the base station in the method 1000 for transmitting control information in a wireless communications system in this embodiment of the present invention, and the foregoing and other operations and/or functions of the modules in the base station 500 are separately performed to implement corresponding procedures of the foregoing method. Details are not repeated herein for brevity.

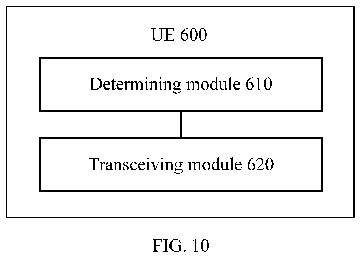

FIG. 10 is a schematic block diagram of UE 600 for transmitting control information in a wireless communications system according to an embodiment of the present invention. The UE 600 includes:
a determining module 610, configured to determine a time domain resource used by a control channel, where the control channel is configured to transmit control information of a plurality of UEs, the UE is one of the plurality of UEs, and the time domain resource includes polling time of a plurality of beams; and
a transceiving module 620, configured to receive or send control information of the UE within the polling time of the plurality of beams included in the time domain resource determined by the determining module 610.

Specifically, the determining module 610 determines the time domain resource used by the control channel. Optionally, the determining module 610 may determine, according to the protocol, which symbols of a timeslot are used by the control channel, and determine, according to a cell number, the timeslot that contains the used time domain resource, to determine a location of the time domain resource used by the control channel in a frame structure. For example, if the protocol defines that the control channel uses the first four symbols and the cell number is 0, optionally, as shown in FIG. 2, the determining module 610 may determine that the time domain resource used by the control channel is the first four symbols of a timeslot 0 or the first four symbols of a timeslot 5. The control channel is configured to transmit the control information of the plurality of UEs, that is, the time domain resource is a set of time domain resources occupied by transmission of the control information of the plurality of UEs. The UE is one of the plurality of UEs. Optionally, the time domain resource may be the first four symbols of the timeslot 0 shown in FIG. 2, or the first four symbols of the timeslot 5. This embodiment of the present invention is not limited thereto. Each of the plurality of UEs has a corresponding beam, and a base station transmits the control information to the UE through the beam corresponding to the UE. The time domain resource includes the polling time of the plurality of beams, that is, the base station implements control information transmission with the plurality of UEs by polling the plurality of beams. The transceiving module 620 receives or sends the control information of the UE through the beam corresponding to the UE within the polling time of the plurality of beams. Optionally, when the time domain resource is a time domain resource used by uplink control information, the transceiving module 620 may receive, within the polling time of the plurality of beams, the uplink control information to the base station through the beam corresponding to the UE. When the time domain resource is a time domain resource used by downlink control information, the transceiving module 620 may receive, within the polling time of the plurality of beams, the downlink control information sent by the base station through the beam corresponding to the UE. Optionally, downlink control information of different UEs may be sent in different frequency bands, and the transceiving module 620 may receive the downlink control information in the different frequency bands.

Therefore, according to the UE for transmitting the control information in the wireless communications system in this embodiment of the present invention, the UE first determines the time domain resource used by the control channel, and receives or sends the control information of the UE within the polling time of the plurality of beams included in the time domain resource. This implements control information transmission between the base station and the UE.

Optionally, in this embodiment of the present invention, the plurality of beams are configured available beams, and the determining module 610 is further configured to:
determine polling time of the beam corresponding to the UE in the configured available beams according to a beam identifier ID of the beam corresponding to the UE.

The transceiving module 620 is specifically configured to:
receive or send the control information of the UE within the polling time that is of the beam corresponding to the UE and that is determined by the determining module 610.

Specifically, when the plurality of beams are the configured available beams, that is, the plurality of beams to be polled by the base station are the configured available beams, optionally, the base station may poll the plurality of beams according to beam IDs. For example, the base station may sequentially poll the plurality of beams according to an ascending order of the beam IDs. Because the beams have a same polling time, the determining module 610 may determine the polling time of the beam corresponding to the UE according to the beam ID of the beam corresponding to the UE. After the determining module 610 determines the polling time of the beam corresponding to the UE, the transceiving module 620 may receive or send the control information of the UE within the polling time of the beam corresponding to the UE. Optionally, when the time domain resource is the time domain resource used by the uplink control information, the transceiving module 620 may send, within the polling time of the beam corresponding to the UE, the uplink control information to the base station through the beam corresponding to the UE. When the time domain resource is the time domain resource used by the downlink control information, the transceiving module 620 may receive, through the beam corresponding to the UE within the polling time of the beam corresponding to the UE, the downlink control information sent by the base station.

Optionally, in this embodiment of the present invention, the plurality of beams are beams corresponding to the plurality of UEs in the configured available beams, and the UE 600 may further include:
a first receiving module, configured to receive a broadcast message sent by the base station, where the broadcast message is used to notify a quantity of beams corresponding to the plurality of UEs.

The determining module 610 is further configured to:
determine the polling time of the beams corresponding to the plurality of UEs according to the quantity of beams corresponding to the plurality of UEs.

The transceiving module 620 is specifically configured to:
receive or send the control information of the UE within the polling time that is of the beams corresponding to the plurality of UEs and that is determined by the determining module 610.

Specifically, when the plurality of beams are the beams corresponding to the plurality of UEs in the configured available beams, that is, the plurality of beams to be polled by the base station are beams actually allocated to the plurality of UEs. In this case, the beam IDs of the beams corresponding to the plurality of UEs may not be consecutive, and the UEs cannot determine the polling time of the corresponding beams according to the beam IDs. In this case, optionally, the first receiving module may receive the broadcast message sent by the base station. The broadcast message is used to notify the UE of the quantity of beams corresponding to the plurality of UEs. The determining module 610 may determine the polling time of the beams corresponding to the plurality of UEs based on the quantity of beams corresponding to the plurality of UEs, and transceiving module 620 may receive or send the control information of the UE within the polling time of the beams corresponding to the plurality of UEs. The control information of the UE is repeatedly sent within the polling time of the beams corresponding to the plurality of UEs. For uplink control information transmission, the transceiving module 620 repeatedly sends the uplink control information to the base station within the polling time of each of the beams corresponding to the plurality of UEs. For downlink control information transmission, the UE does not know when the polling time of its corresponding beam arrives, either. Optionally, the transceiving module 620 keeps in a state of receiving the downlink control information within the polling time of each of the beams corresponding to the plurality of UEs, so that the transceiving module 620 can receive the downlink control information of the UE when the base station polls the beam corresponding to the UE. If the beam corresponding to the UE supports transmission of control information of a plurality of UEs, optionally, the downlink control information received by the transceiving module 620 may include downlink control information of each of the plurality of UEs, that is, the downlink control information is a set of the downlink control information of the plurality of UEs. Downlink control information of different UEs may be distinguished by different coding sequences. After receiving the downlink control information, the transceiving module 620 may decode the downlink control information by using a decoding sequence of the UE, to obtain the downlink control information of the UE.

Optionally, in this embodiment of the present invention, the plurality of beams are beams corresponding to the plurality of UEs in the configured available beams, and the UE 600 may further include:
a second receiving module, configured to receive indication information sent by the base station, where the indication information is used to indicate a polling sequence of the beam corresponding to the UE in the beams corresponding to the plurality of UEs.

In this case, the determining module 610 is further configured to:
determine the polling time of the beam corresponding to the UE in the beams corresponding to the plurality of UEs according to the polling sequence of the beam corresponding to the UE in the beams corresponding to the plurality of UEs.

In this case, the transceiving module 620 is specifically configured to:
receive or send the control information of the UE within the polling time of the beam corresponding to the UE.

Specifically, when the UE does not know the polling sequence of its corresponding beam, the transceiving module 620 repeatedly sends or receives the control information within the polling time of each of the plurality of beams. Optionally, in this embodiment of the present invention, the second receiving module may receive the indication information sent by the base station. The indication information is used to indicate the polling sequence of the beam corresponding to the UE in the beams corresponding to the plurality of UEs. Therefore, the determining module 610 may determine the polling time of the beam corresponding to the UE in the beams corresponding to the plurality of UEs according to the polling sequence of the beam corresponding to the UE in the beams corresponding to the plurality of UEs, and the transceiving module 620 may send or receive the control information of the UE within the polling time of the beam corresponding to the UE, instead of repeatedly sending or receiving the control information of the UE within the polling time of each beam. Optionally, when the time domain resource is the time domain resource used by the uplink control information, the transceiving module 620 may send, within the polling time of the beam corresponding to the UE, the uplink control information to the base station through the beam corresponding to the UE. When the time domain resource is the time domain resource used by the downlink control information, the transceiving module 620 may receive, within the polling time of the beam corresponding to the UE, the downlink control information sent by the base station through the beam corresponding to the UE.

Therefore, according to the UE for transmitting the control information in the wireless communications system in this embodiment of the present invention, the UE first determines the time domain resource used by the control channel, and receives or sends the control information of the UE within the polling time of the plurality of beams included in the time domain resource. This implements control information transmission between the base station and the UE.

The UE 600 according to this embodiment of the present invention may correspond to the UE in the method 2000 for transmitting control information in a wireless communications system in this embodiment of the present invention, and the foregoing and other operations and/or functions of the modules in the UE 600 are separately performed to implement corresponding procedures of the foregoing method. Details are not repeated herein for brevity.

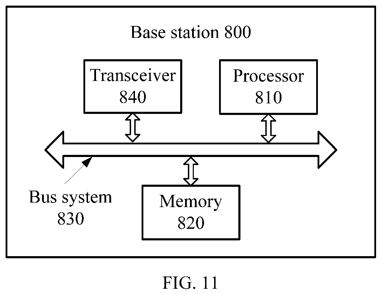

As shown in FIG. 11, an embodiment of the present invention further provides a base station 800. The base station 800 includes a processor 810, a memory 820, a bus system 830, and a transceiver 840. The processor 810, the memory 820, and the transceiver 840 are connected by using the bus system 830. The memory 820 is configured to store an instruction. The processor 810 is configured to execute the instruction stored in the memory 820, to receive or send a signal by using the transceiver 840. The processor 810 is configured to determine a time domain resource used by a control channel. The control channel is configured to transmit control information of a plurality of UEs. The time domain resource includes polling time of a plurality of beams. The transceiver 840 is configured to receive or send the control information of the plurality of UEs within the polling time of the plurality of beams. Control information of each of the plurality of UEs is transmitted through a beam corresponding to the UE.

Therefore, according to the base station for transmitting control information in a wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

It should be understood that, in this embodiment of the present invention, the processor 810 may be a central processing unit (Central Processing Unit, "CPU" for short). Alternatively, the processor 810 may be another general-purpose processor, a digital signal processor (DSP), an application-specific integrated circuit (ASIC), a field programmable gate array (FPGA), or another programmable logic device, discrete gate or transistor logic device, or a discrete hardware component. The general-purpose processor may be a microprocessor or the processor may be any conventional processor, and the like.

The memory 820 may include a read-only memory and a random access memory, and provides an instruction and data to the processor 810. A part of the memory 820 may further include a non-volatile random access memory. For example, the memory 820 may further store information, such as a device type.

In addition to a data bus, the bus system 830 may further include a power bus, a control bus, a status signal bus, and the like. However, for clarity of description, various buses are marked as the bus system 830 in the figure.

During implementation, each step of the foregoing method may be implemented by a hardware integrated logical circuit in the processor 810 or by using an instruction in a software form. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 820, and the processor 810 reads information in the memory 820 and completes the steps in the foregoing method together with hardware of the processor. To avoid repetition, details are not described herein again.

Optionally, the transceiver 840 may include a transmitter and a receiver. The transmitter and the receiver may be integrated or may be separate and stand-alone modules. The transmitter may be configured to transmit a signal, and the receiver may be configured to receive a signal. Optionally, in this embodiment of the present invention, the transmitter may be configured to send the control information, and the receiver may be configured to receive the control information.

Optionally, in this embodiment of the present invention, the plurality of beams are configured available beams, and in this case, the transceiver 840 is further configured to:
receive, within polling time of a first beam, uplink control information sent by at least one UE corresponding to the first beam within the polling time of the first beam; or
send downlink control information to at least one UE corresponding to a first beam within polling time of the first beam; where
the first beam is a beam in a first beam set, and the first beam set includes beams corresponding to the plurality of UEs in the configured available beams.

Optionally, in this embodiment of the present invention, the plurality of beams are beams corresponding to the plurality of UEs in the configured available beams, and the transceiver 840 is further configured to:
send a broadcast message to the plurality of UEs, where the broadcast message is used to notify a quantity of beams corresponding to the plurality of UEs, and the quantity of beams corresponding to the plurality of UEs is used by the plurality of UEs to determine the polling time of the beams corresponding to the plurality of UEs.

In this case, the transceiver 840 is specifically configured to:
receive, within polling time of a second beam, uplink control information sent by at least one UE corresponding to the second beam within polling time of each of the beams corresponding to the plurality of UEs; or
send downlink control information to at least one UE corresponding to a second beam within polling time of the second beam; where
the second beam is a beam in the beams corresponding to the plurality of UEs.

Optionally, in this embodiment of the present invention, the plurality of beams are beams corresponding to the plurality of UEs in the configured available beams, and the transceiver 840 is further configured to:
send indication information to each of the plurality of UEs, where the indication information is used to indicate a polling sequence of the beam corresponding to each of the plurality of UEs in the beams corresponding to the plurality of UEs.

In this case, the transceiver 840 is specifically configured to:
receive, within polling time of a third beam, uplink control information sent by at least one UE corresponding to the third beam within the polling time of the third beam; or
send downlink control information to at least one UE corresponding to a third beam within polling time of the third beam; where
the third beam is a beam in the beams corresponding to the plurality of UEs, and the polling time of the third beam is determined by the at least one UE corresponding to the third beam according to a polling sequence of the third beam.

Therefore, according to the base station for transmitting control information in a wireless communications system in this embodiment of the present invention, the base station first determines the time domain resource used by the control channel, and receives or sends the control information of the plurality of UEs within the polling time of the plurality of beams included in the time domain resource. This implements control information transmission between the base station and the plurality of UEs.

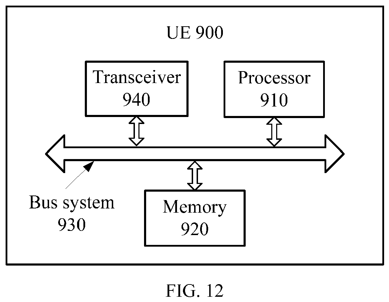

As shown in FIG. 12, an embodiment of the present invention further provides UE 900. The UE 900 includes a processor 910, a memory 920, a bus system 930, and a transceiver 940. The processor 910, the memory 920, and the transceiver 940 are connected by using the bus system 930. The memory 920 is configured to store an instruction. The processor 910 is configured to execute the instruction stored in the memory 920, to receive or send a signal by using the transceiver 940. The processor 910 is configured to determine a time domain resource used by a control channel. The control channel is configured to transmit control information of a plurality of UEs and the UE is one of the plurality of UEs. The time domain resource includes polling time of a plurality of beams. The transceiver 940 is configured to receive or send the control information of the UE within the polling time of the plurality of beams.

Therefore, according to the UE for transmitting the control information in the wireless communications system in this embodiment of the present invention, the UE first determines the time domain resource used by the control channel, and receives or sends the control information of the UE within the polling time of the plurality of beams included in the time domain resource. This implements control information transmission between a base station and the UE.

It should be understood that, in this embodiment of the present invention, the processor 910 may be a central processing unit (Central Processing Unit, "CPU" for short). Alternatively, the processor 910 may be another general-purpose processor, a digital signal processor (DSP), an application-specific integrated circuit (ASIC), a field programmable gate array (FPGA), or another programmable logic device, discrete gate or transistor logic device, or a discrete hardware component. The general-purpose processor may be a microprocessor or the processor may be any conventional processor, and the like.

The memory 920 may include a read-only memory and a random access memory, and provides an instruction and data to the processor 910. A part of the memory 920 may further include a non-volatile random access memory. For example, the memory 920 may further store information, such as a device type.

In addition to a data bus, the bus system 930 may further include a power bus, a control bus, a status signal bus, and the like. However, for clarity of description, various buses are marked as the bus system 930 in the figure.

During implementation, each step of the foregoing method may be implemented by a hardware integrated logical circuit in the processor 910 or by using an instruction in a software form. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 920, and the processor 910 reads information in the memory 920 and completes the steps in the foregoing method together with hardware of the processor. To avoid repetition, details are not described herein again.

Optionally, the transceiver 940 may include a transmitter and a receiver. The transmitter and the receiver may be integrated or may be separate and stand-alone modules. The transmitter is configured to transmit a signal, and the receiver is configured to receive a signal. Optionally, in this embodiment of the present invention, the transmitter may be configured to send the control information, and the receiver may be configured to receive the control information.

Optionally, in this embodiment of the present invention, the plurality of beams are configured available beams, and the processor 910 is further configured to:
determine polling time of a beam corresponding to the UE in the configured available beams according to a beam identifier ID of the beam corresponding to the UE.

The transceiver 940 is specifically configured to:
receive or send the control information of the UE within the polling time of the beam corresponding to the UE.

Optionally, in this embodiment of the present invention, the plurality of beams are beams corresponding to the plurality of UEs in the configured available beams, and the transceiver 940 is further configured to:
receive a broadcast message sent by the base station, where the broadcast message is used to notify a quantity of beams corresponding to the plurality of UEs.

The processor 910 is further configured to:
determine the polling time of the beams corresponding to the plurality of UEs according to the quantity of beams corresponding to the plurality of UEs.

The transceiver 940 is specifically configured to:
receive or send the control information of the UE within the polling time of the beams corresponding to the plurality of UEs.

Optionally, in this embodiment of the present invention, the plurality of beams are beams corresponding to the plurality of UEs in the configured available beams, and the transceiver 940 is further configured to:
receive indication information sent by the base station, where the indication information is used to indicate a polling sequence of the beam corresponding to the UE in the beams corresponding to the plurality of UEs.

The processor 910 is further configured to:
determine the polling time of the beam corresponding to the UE in the beams corresponding to the plurality of UEs according to the polling sequence of the beam corresponding to the UE in the beams corresponding to the plurality of UEs.

In this case, the transceiver 940 is specifically configured to:
receive or send the control information of the UE within the polling time of the beam corresponding to the UE.

Therefore, according to the UE for transmitting the control information in the wireless communications system in this embodiment of the present invention, the UE first determines the time domain resource used by the control channel, and receives or sends the control information of the UE within the polling time of the plurality of beams included in the time domain resource. This implements control information transmission between a base station and the UE.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the method described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting control information in a wireless communications system, comprising:
determining, by a base station, a time domain resource used by a control channel, wherein the control channel is configured to transmit control information of a plurality of user equipments UEs, and the time domain resource comprises polling time of a plurality of beams; and
receiving or sending, by the base station, the control information of the plurality of UEs within the polling time of the plurality of beams, wherein control information of each of the plurality of UEs is transmitted through a beam corresponding to the UE.

2. The method according to claim 1, wherein the plurality of beams are configured available beams, and the receiving or sending, by the base station, the control information of the plurality of UEs within the polling time of the plurality of beams comprises:
receiving, by the base station within polling time of a first beam, uplink control information sent by at least one UE corresponding to the first beam within the polling time of the first beam; or
sending, by the base station, downlink control information to at least one UE corresponding to a first beam within polling time of the first beam; wherein
the first beam is a beam in a first beam set, and the first beam set comprises beams corresponding to the plurality of UEs in the configured available beams.

3. The method according to claim 1, wherein the plurality of beams are beams corresponding to the plurality of UEs in configured available beams, and before the receiving or sending, by the base station, the control information of the plurality of UEs within the polling time of the plurality of beams, the method further comprises:
sending, by the base station, a broadcast message to the plurality of UEs, wherein the broadcast message is used to notify a quantity of beams corresponding to the plurality of UEs, and the quantity of beams corresponding to the plurality of UEs is used by the plurality of UEs to determine the polling time of the beams corresponding to the plurality of UEs; and
the receiving or sending, by the base station, the control information of the plurality of UEs within the polling time of the plurality of beams comprises:
receiving, by the base station within polling time of a second beam, uplink control information sent by at least one UE corresponding to the second beam within the polling time of the beams corresponding to the plurality of UEs; or
sending, by the base station, downlink control information to at least one UE corresponding to a second beam within polling time of the second beam; wherein
the second beam is a beam in the beams corresponding to the plurality of UEs.

4. The method according to claim 1, wherein the plurality of beams are beams corresponding to the plurality of UEs in configured available beams, and before the receiving or sending, by the base station, the control information of the plurality of UEs within the polling time of the plurality of beams, the method further comprises:
sending, by the base station, indication information to each of the plurality of UEs, wherein the indication information is used to indicate a polling sequence of a beam corresponding to each of the plurality of UEs in the beams corresponding to the plurality of UEs; and
the receiving or sending, by the base station, the control information of the plurality of UEs within the polling time of the plurality of beams comprises:
receiving, by the base station within polling time of a third beam, uplink control information sent by at least one UE corresponding to the third beam within the polling time of the third beam; or
sending, by the base station, downlink control information to at least one UE corresponding to a third beam within polling time of the third beam; wherein
the third beam is a beam in the beams corresponding to the plurality of UEs, and the polling time of the third beam is determined by the at least one UE corresponding to the third beam according to a polling sequence of the third beam.

5. A method for transmitting control information in a wireless communications system, comprising:
determining, by UE, a time domain resource used by a control channel, wherein the control channel is configured to transmit control information of a plurality of UEs, the UE is one of the plurality of UEs, and the time domain resource comprises polling time of a plurality of beams; and
receiving or sending, by the UE, control information of the UE within the polling time of the plurality of beams.

6. The method according to claim 5, wherein the plurality of beams are configured available beams, and the receiving or sending, by the UE, control information of the UE within the polling time of the plurality of beams comprises:
determining, by the UE, polling time of a beam corresponding to the UE in the configured available beams according to a beam identifier ID of the beam corresponding to the UE; and
receiving or sending, by the UE, the control information of the UE within the polling time of the beam corresponding to the UE.

7. The method according to claim 5, wherein the plurality of beams are beams corresponding to the plurality of UEs in configured available beams, and before the receiving or sending, by the UE, control information of the UE within the polling time of the plurality of beams, the method further comprises:
receiving, by the UE, a broadcast message sent by a base station, wherein the broadcast message is used to notify a quantity of beams corresponding to the plurality of UEs; and
the receiving or sending, by the UE, control information of the UE within the polling time of the plurality of beams comprises:
determining, by the UE, the polling time of the beams corresponding to the plurality of UEs according to the quantity of beams corresponding to the plurality of UEs; and
receiving or sending, by the UE, the control information of the UE within the polling time of the beams corresponding to the plurality of UEs.

8. The method according to claim 5, wherein the plurality of beams are beams corresponding to the plurality of UEs in configured available beams, and before the receiving or sending, by the UE, control information of the UE within the polling time of the plurality of beams, the method further comprises:
receiving, by the UE, indication information sent by a base station, wherein the indication information is used to indicate a polling sequence of a beam corresponding to the UE in the beams corresponding to the plurality of UEs; and
the receiving or sending, by the UE, control information of the UE within the polling time of the plurality of beams comprises:
determining, by the UE, polling time of the beam corresponding to the UE in the beams corresponding to the plurality of UEs according to the polling sequence of the beam corresponding to the UE in the beams corresponding to the plurality of UEs; and
receiving or sending, by the UE, the control information of the UE within the polling time of the beam corresponding to the UE.

9. Abase station, comprising:
a determining module, configured to determine a time domain resource used by a control channel, wherein the control channel is configured to transmit control information of a plurality of UEs, and the time domain resource comprises polling time of a plurality of beams; and
a transceiving module, configured to receive or send the control information of the plurality of UEs within the polling time of the plurality of beams comprised in the time domain resource determined by the determining module, wherein control information of each of the plurality of UEs is transmitted through a beam corresponding to the UE.

10. The base station according to claim 9, wherein the plurality of beams are configured available beams, and the transceiving module is specifically configured to:
receive, within polling time of a first beam, uplink control information sent by at least one UE corresponding to the first beam within the polling time of the first beam; or
send downlink control information to at least one UE corresponding to a first beam within polling time of the first beam; wherein
the first beam is a beam in a first beam set, and the first beam set comprises beams corresponding to the plurality of UEs in the configured available beams.

11. The base station according to claim 9, wherein the plurality of beams are beams corresponding to the plurality of UEs in configured available beams, and the base station further comprises:
a first sending module, configured to send a broadcast message to the plurality of UEs, wherein the broadcast message is used to notify a quantity of beams corresponding to the plurality of UEs, and the quantity of beams corresponding to the plurality of UEs is used by the plurality of UEs to determine the polling time of the beams corresponding to the plurality of UEs; and
the transceiving module is specifically configured to:
receive, within polling time of a second beam, uplink control information sent by at least one UE corresponding to the second beam within the polling time of the beams corresponding to the plurality of UEs; or
send downlink control information to at least one UE corresponding to a second beam within polling time of the second beam; wherein
the second beam is a beam in the beams corresponding to the plurality of UEs.

12. The base station according to claim 9, wherein the plurality of beams are beams corresponding to the plurality of UEs in configured available beams, and the base station further comprises:
a second sending module, configured to send indication information to each of the plurality of UEs, wherein the indication information is used to indicate a polling sequence of a beam corresponding to each of the plurality of UEs in the beams corresponding to the plurality of UEs; and
the transceiving module is specifically configured to:
receive, within polling time of a third beam, uplink control information sent by at least one UE corresponding to the third beam within the polling time of the third beam; or
send downlink control information to at least one UE corresponding to a third beam within polling time of the third beam; wherein
the third beam is a beam in the beams corresponding to the plurality of UEs, and the polling time of the third beam is determined by the at least one UE corresponding to the third beam according to a polling sequence of the third beam.

13. User equipment UE, comprising:
a determining module, configured to determine a time domain resource used by a control channel, wherein the control channel is configured to transmit control information of a plurality of UEs, the UE is one of the plurality of UEs, and the time domain resource comprises polling time of a plurality of beams; and
a transceiving module, configured to receive or send control information of the UE within the polling time of the plurality of beams comprised in the time domain resource determined by the determining module.

14. The UE according to claim 13, wherein the plurality of beams are configured available beams, and the determining module is further configured to:
determine polling time of a beam corresponding to the UE in the configured available beams according to a beam identifier ID of the beam corresponding to the UE; and
the transceiving module is specifically configured to:
receive or send the control information of the UE within the polling time that is of the beam corresponding to the UE and that is determined by the determining module.

15. The UE according to claim 13, wherein the plurality of beams are beams corresponding to the plurality of UEs in configured available beams, and the UE further comprises:
a first receiving module, configured to receive a broadcast message sent by a base station, wherein the broadcast message is used to notify a quantity of beams corresponding to the plurality of UEs;
the determining module is further configured to:
determine the polling time of the beams corresponding to the plurality of UEs according to the quantity of beams corresponding to the plurality of UEs; and
the transceiving module is specifically configured to:
receive or send the control information of the UE within the polling time that is of the beams corresponding to the plurality of UEs and that is determined by the determining module.

16. The UE according to claim 13, wherein the plurality of beams are beams corresponding to the plurality of UEs in configured available beams, and the UE further comprises:
a second receiving module, configured to receive indication information sent by a base station, wherein the indication information is used to indicate a polling sequence of a beam corresponding to the UE in the beams corresponding to the plurality of UEs;
the determining module is further configured to:
determine polling time of the beam corresponding to the UE in the beams corresponding to the plurality of UEs according to the polling sequence that is of the beam corresponding to the UE in the beams corresponding to the plurality of UEs and that is indicated by the indication information received by the second receiving module; and
the transceiving module is specifically configured to:
receive or send the control information of the UE within the polling time that is of the beam corresponding to the UE and that is determined by the determining module.
